# EUROPEAN PATENT APPLICATION

(11) **EP 1 096 363 A2**
(43) Date of publication of application: **02.05.2001**
(21) Application number: 00122357.7
(22) Date of filing: 24.10.2000
(51) Int. Cl.: G06F 3/12

(54) **Print system, print method and computer readable recording medium in which print program is stored**

(30) Priority: 25.10.1999 JP 30246199
(71) Applicant: Riso Kagaku Corporation, Tokyo 105 (JP)
(72) Inventor: Ogino, Junichi, Riso Kagaku Corp., R&D Center, Inashiki-gun, Ibaraki-ken (JP)
(74) Representative: HOFFMANN - EITLE

(57) **Abstract**

According to a print system, a print method, and a computer readable recording medium in which a print program is stored of the present invention, printer drivers of a plurality of printers for executing print operations are automatically sequentially selected, and print processes are executed by using the selected printer drivers to realize a plurality of efficient print processes. Therefore, effort and time required to the multiple print process can be considerably reduced.

## Description

### CROSS REFERENCE TO RELATED APPLICATIONS

The subject application is related to subject matter disclosed in the Japanese Patent Application No.Hei11-302461 filed in October 25, 1999 in Japan, to which the subject application claims priority under the Paris Convention and which is incorporated by reference herein.

### BACKGROUND OF THE INVENTION

### 1. Field of the Invention

The present invention relates to a print system for outputting print data and a print instruction from a print process control device on a network to a plurality of printers connected on the network, a print method, and a computer readable recording medium in which a print program is stored and, more particularly, to a technique for realizing a plurality of efficient print processes by making it possible to simultaneously perform print processes to a plurality of printers in one setting operation and reducing effort and time required to perform the plurality of print processes.

### 2. Description of the Related Art

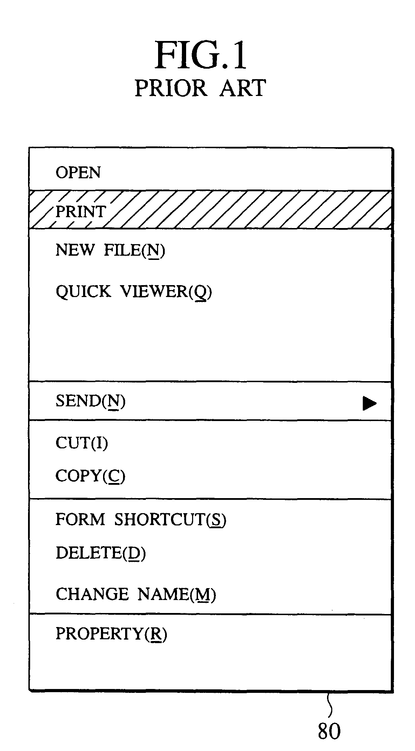

In general, when desired data is output from a computer system to a printer to print the data, an appropriate application program on the computer system is started, and a print process is designated from a menu in the application program, or an icon of, e.g., a file to be printed is right-clicked on an operating system of the computer system itself to start a file menu screen shown in FIG. 1. A print menu in the menu is designated to execute a print process of data.

As described above, although the conventional print method executes a print process through an appropriate application program, the print process has a technical problem described below.

More specifically, some application program can execute a print process to only a printer which is set as a default printer. However, when data is to be output to a plurality of printers through the application program and to be printed, according to a conventional print process method, print processes cannot be executed until a printer for performing a print process are sequentially manually changed and set as a default printer. More specifically, when a print process is to be executed to a plurality of printers, each time one print process is ended, printer setting operations the number of which is equal the number of printers which perform print processes must be performed. For this reason, the efficiency of a multiple print process is very poor, and effort and time required to all the print processes considerably increase.

### SUMMARY OF THE INVENTION

The present invention has been made in consideration of the above-mentioned technical problem, and its object is to provide a print system which realizes a plurality of efficient print processes by making it possible to simultaneously perform print processes to a plurality of printers in one operation and which considerably reduces effort and time required to perform the plurality of print processes.

And it is another object of the present invention to provide a print method which realizes a plurality of efficient print processes by making it possible to simultaneously perform print processes to a plurality of printers in one operation and which considerably reduces effort and time required to perform the plurality of print processes.

Furthermore, it is still another object of the present invention to provide a computer readable recording medium in which a print program which realizes a plurality of efficient print processes by making it possible to simultaneously perform print processes to a plurality of printers in one operation and which considerably reduces effort and time required to perform the multiple print process is stored.

In order to solve the above technical problem, the present inventor studied the following idea. That is, if printer drivers of a plurality of printers for executing print operations are automatically sequentially selected, and print processes are executed by using the selected printer drivers to realize a plurality of efficient print processes, then effort and time required to the multiple print process can be considerably reduced.

The first characteristic feature of the present invention based on this idea is a print system in which a plurality of printers and a print process control device for outputting print data and a print instruction are connected to each other on a network, wherein the print process control device comprises: printer selection screen display means for displaying a printer selection screen for selecting a predetermined printer from a plurality of printers for executing a print process of the print data on an output unit; and print process means for sequentially executing print processes of the print data to printers which are selected such that an operator operates the printer selection screen.

In this manner, since a plurality of printers can simultaneously perform print processes in one operation, a multiple print process can be more efficiently realized, and effort and time required to perform the multiple print process can be reduced.

The second characteristic feature of the present invention is a print method for outputting print data and a print instruction from a print process control device on a network to a plurality of printers connected on the network, comprising: the printer selection screen display step of displaying a printer selection screen for selecting a predetermined printer from the plurality of printers for executing print processes of the print data on an output unit of the print process control device, and the print process step of sequentially executing print processes of print data to printers selected such that an operator operates the printer selection screen.

In this manner, since a plurality of printers can simultaneously perform print processes in one operation, a multiple print process can be more efficiently realized, and effort and time required to perform the multiple print process can be reduced.

In addition, the third characteristic feature of the present invention is a computer readable recording medium in which a print program for outputting print data and a print instruction from a print process control device on a network to a plurality of printers connected on the network is stored, wherein the print process comprising and make a computer system execute a printer selection screen display process of displaying a printer selection screen for selecting a predetermined printer from the plurality of printers for executing print processes of the print data on an output unit of the print process control device, and a print process of sequentially executing print processes of print data to printers selected such that an operator operates the printer selection screen to cause a computer to execute these processes.

In this manner, since a plurality of printers can simultaneously perform print processes in one operation, a multiple print process can be more efficiently realized, and effort and time required to perform the multiple print process can be reduced.

Here, as the recording medium, for example, a semiconductor memory, a magnetic disk, an optical disk, a photomagnetic disk, or the like may be used.

The print process is constituted by a printer driver automatic selection process of sequentially automatically selecting printer drivers corresponding to selected printers such that an operator operates the printer selection screen, a print process of printing data by using a printer driver selected automatically, and a decision process of deciding whether there is a print process which is unexecuted in the plurality of selected printers or not. These processes are preferably performed until all the selected printers execute the print processes.

A plurality of printers that can execute print process are grouped, and a group may be selected, so that a plurality of printers may be selected.

In this manner, a plurality of efficient print processes can be executed.

In addition, it is desired that an error detection process for detecting whether an error is generated in execution of the print process of the print data or not is set.

In this manner, even though an error is generated in a plurality of print processes, a user can rapidly recognize the error and cancel the error, so that the user can perform more efficient print process.

Other and further objects and features of the present invention will become obvious upon understanding of the illustrative embodiments about to be described in connection with the accompanying drawings or will be indicated in the appended claims, and various advantages not referred to herein will occur to one skilled in the art upon employing of the invention in practice.

### BRIEF DESCRIPTION OF THE DRAWINGS

FIG. 1 is a diagram for explaining a conventional print process.
FIG. 2 is a diagram showing the configuration of a print system according to an embodiment of the present invention.
FIG. 3 is a block diagram showing the configuration of a print process control device according to the embodiment of the present invention.
FIG. 4 is a flow chart showing a print method according to the embodiment of the present invention.
FIG. 5 is a diagram showing the appearance of the print process control device according to the embodiment of the present invention.
FIG. 6 is a diagram showing a menu screen according to the embodiment of the present invention.
FIG. 7 is a diagram showing a printer selection screen according to the embodiment of the present invention.
FIG. 8 is a diagram showing a group edition screen according to the embodiment of the present invention.

### DETAILED DESCRIPTION OF THE PREFERRED EMBODIMENTS

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

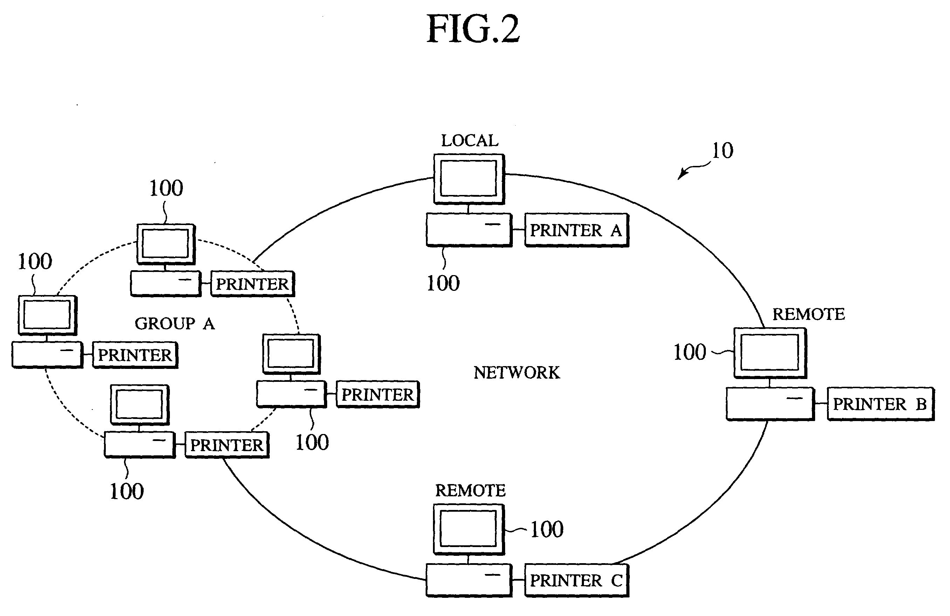

The configurations and operations of a print system, a print method, and a computer readable recording medium in which a print program is stored will be described below with reference to FIGs. 2 to 8.

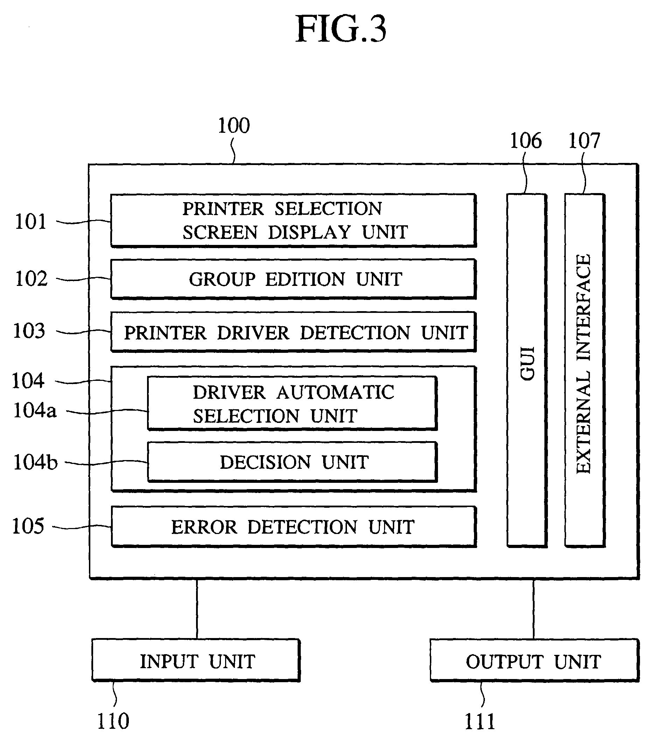

First of all, referring to FIGs. 2 and 3, a description of a configuration of a print system according to an embodiment of the present invention will be described.

In a print system according to an embodiment of the present invention, as shown in FIG. 2, a plurality of printers on a network is connected to a print process control device (e.g., a computer or the like) for outputting print data and a print instruction to the printers. A print control system 100 constituting a print system 10, as shown in FIG. 3, comprises a printer selection screen display unit 101 for displaying a printer selection screen for selecting a predetermined printer from a plurality of printers for executing print processes of print data on an output unit, a group edition unit 102 for grouping a plurality of printers, a printer driver detection unit 103 for detecting a printer driver (of a printer which can execute a print process) installed in a local site (or a client), a print process unit 104 for executing a print process by using the printer driver of the printer selected on the printer selection screen, an error detection unit 105 for detecting whether an error is generated or not while data is printed by the print process unit 104, a GUI (Graphical User Interface) 106 for graphically displaying input/output information according to a print process for a user, and an external interface 107 for controlling a data input/output process between the external interface 107 and a printer on the computer network to which a local site belongs.

The print process unit 104 has a driver automatic selection unit 104a for automatically selecting a printer driver of a printer which performs a print operation next from a plurality of printers selected on the printer selection screen and a decision unit 104b for deciding whether a printer which is not perform a print process is present or not.

The print control system 100 according to the embodiment of the present invention has an input unit 110 such as a keyboard, a mouse pointer, or the like for inputting various control parameters and input data related to the print control system 100, and an output unit 111 such as a printer, a display, or the like for outputting a menu screen, a printer selection screen, a group edition screen, an error display, output data or the like.

A print method according to the embodiment of the present invention will be described below.

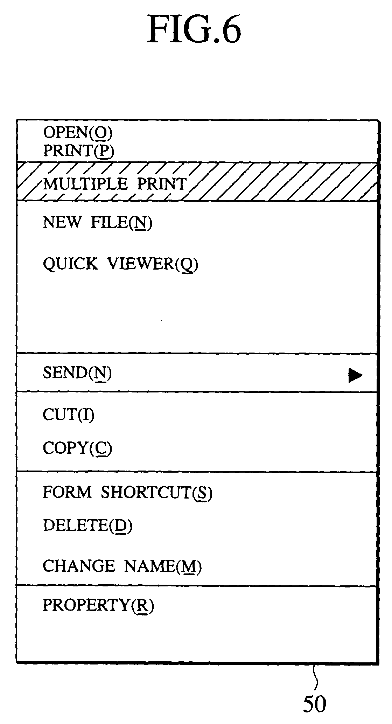

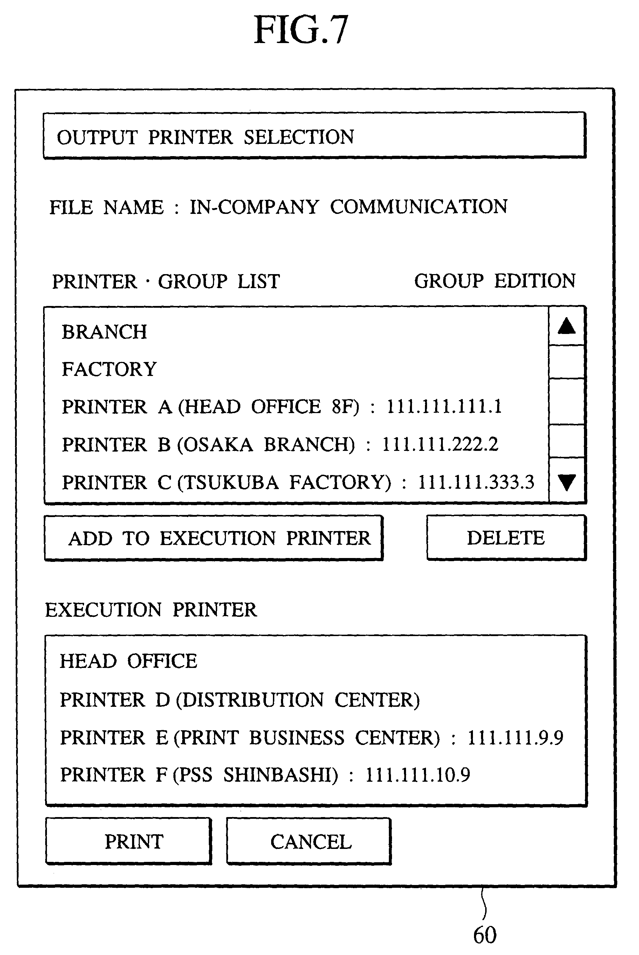

The print method according to the embodiment of the present invention is performed by the five following process steps which are roughly classified. That is, (A) the icon of print data is clicked by a mouse or the like to start a menu screen 50 shown in FIG. 6, (B) a menu "multiple print" is selected from the menu screen 50 to start a print program and to display a printer selection screen 60 shown in FIG. 7 on the output unit 111 of the print control system 100, (C) the name of a printer for performing a print process is selected from a window "printer, group list" in the printer selection screen 60, (D) button "addition to execution printer" is pressed to display printer information for executing a print operation on a window "execution printer" in the printer selection screen 60 so as to select a plurality of printers which perform print processes, and (E) print processes of print data are sequentially performed to selected printers. These process steps will be described below in detail.

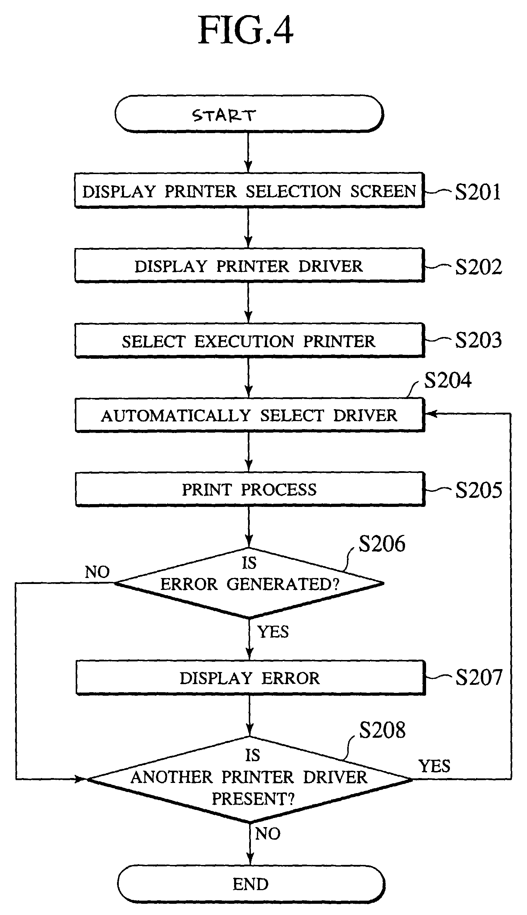

FIG. 4 is a flow chart showing a print process according to the embodiment of the present invention.

When a multiple print process is executed by the print method according to the embodiment of the present invention, first, a menu "multiple print" is selected from the menu screen 50 shown in FIG. 6 to start a print program, thereby executing the following process steps.
(1) The printer selection screen display unit 101 displays the printer selection screen 60 on the output unit 111 of the print control system 100 (printer selection screen display step, S201).
(2) The printer driver detection unit 103 detects a printer driver installed in a local site to display printer information such as a printer name, a port name, a group name (to be described later), and the like corresponding to a detected printer driver name on a window "printer, group list" window in the printer selection screen 60 (printer driver display step, S202).
(3) The name of a printer for performing a print process is selected from the "printer, group list" window, and pushes a button "addition to execution printer", displays printer information to be executed printing on a "execution printer" window in the printer selection screen 60, and a plurality of printers which perform print processes are selected (printer selection, S203). In this case, the printer information is displayed as character information. However, for example, the character information is displayed as an icon, and the icon is dragged and dropped in the "execution printer" window, so that a printer which executes a print process may be selected.
(4) The driver automatic selection unit 104a sequentially selects printer drivers corresponding to printers displayed in the "execution printer" window (driver automatic selection step, S204).
(5) A print process for the corresponding printer is executed by using the selected printer driver (print process step, S205).
(6) In the error detection unit 105, it is decided whether the print process of the selected printer is completed without any error or not (error decision step, S206). When an error is generated as a decision result, the flow shifts to (error display step, S207). When no error is generated, the flow shifts to (printer driver decision step, S208).
(7) Error reason information such as "error is generated in a print operation^{"} representing that an error is generated or may be generated is displayed on the output unit 111 for a user (error display step, S207).
(8) In the decision unit 104b, it is decided whether a printer which does not perform a print process is included in the printers in the "execution printer" window (printer driver decision step, S208). When a printer which executes another print operation is included in the printers in the window as a decision result, the flow shifts to (driver automatic selection step, S204). When no printer is included in the printers in the window, a multiple print process is ended.

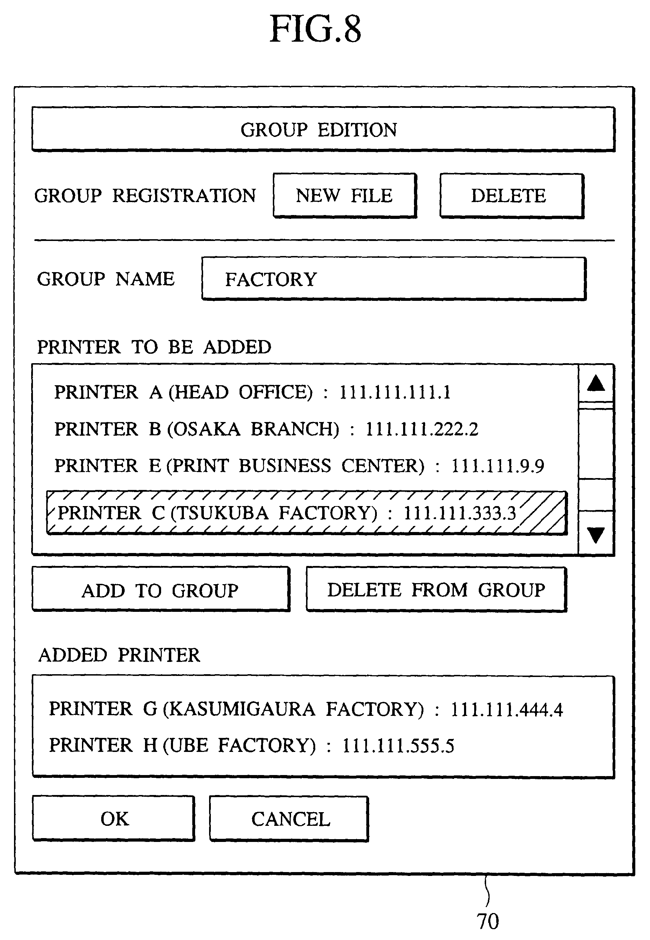

In this case, in the print method according to the embodiment of the present invention, a plurality of printers are selected from the "printer, group list" window of the printer selection screen 60 shown in FIG. 7. However, when many printers are used, for example, a plurality of printers may be grouped through a group edition screen 70 as shown in FIG. 8 (e.g., printers which are expressed as printers G (Kasumigaura factory) are grouped as factory group), and the group name may be displayed on the "printer, group list" window. In this manner, a plurality of printers belonging to the same group need not be selected one by one, and a user can select a plurality of printers belonging to a group by selecting only a group name (e.g., "factory"), and a more efficient print process can be executed.

In addition, for example, a TCP/IP (Transmission Control Protocol/Internet Protocol) is mounted in the external interface 107, and a network printer on a local area network (LAN) as shown in FIG. 2 sets to be able to selected, so that a file formed in the LAN can be simultaneously output to remote printers located at positions distant from the local printer. As a result, a simultaneous multiple print process can be executed to more printers.

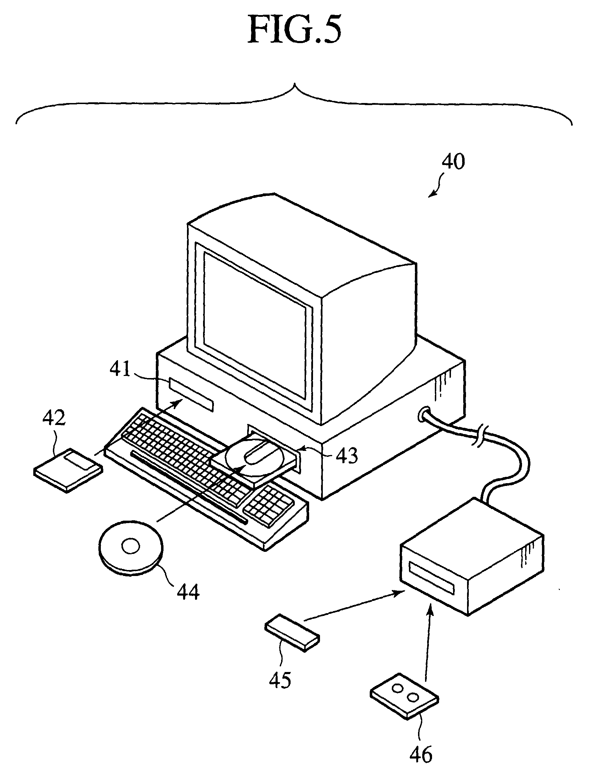

The print control system 100 according to the embodiment of the present invention has, e.g., an appearance having the configuration shown in FIG. 5. More specifically, the print control system 100 according to the embodiment of the present invention is constituted such that the elements of the print control system 100 are incorporated in a computer system 40. The computer system 40 comprises a floppy disk driver 41 and an optical disk driver 43. A floppy disk 42 is inserted into the floppy disk drive 41, and an optical disk 44 is inserted into the optical disk driver 43. By performing predetermined read operations, print programs stored in the recording media can be installed in the system. In addition, when a predetermined drive device is connected to the computer system 40, for example, installation and a read/write operation of data can also be executed by using a ROM 45 serving as a memory device or a cartridge 46 serving as a magnetic tape device.

The print control system 100 according to the embodiment of the present invention may program this method and may store the program in a computer readable recording medium. When a print operation is executed, the recording medium is loaded on the computer system, and the program is stored in a storage unit such as a memory in the computer system, and the print program is executed by a computer, so that a print process control device and a print method according to the present invention can be realized. Here, the recording media include computer readable medium such as a semiconductor memory, a magnetic disk, an optical disk, a photomagnetic disk, and a magnetic tape which can record programs.

### OTHER EMBODIENTS

Various modifications will become possible for those skilled in the art after receiving the teachings of the present disclosure without depending from the scope thereof.

As stated so far, it is obvious that the present invention includes various embodiments besides the embodiments stated above. Accordingly, the technical scope of the present invention should be defined only by the following claims which are reasonably deduced from the above description.

## Claims

1. A print system in which a plurality of printers and a print process control device for outputting print data and a print instruction are connected to each other on a network, wherein
the print process control device comprising:
a printer selection screen display unit for displaying a printer selection screen for selecting a predetermined printer from a plurality of printers for executing a print process of the print data on an output unit; and
a print process unit for sequentially executing print processes of the print data to printers which are selected such that an operator operates the printer selection screen.

2. The print system according to claim 1, wherein
the print process unit comprising:
a printer driver automatic selection unit for sequentially automatically selecting printer drivers corresponding to selected printers to execute a print process; and
a decision unit for deciding whether there is a print process which is unexecuted in the plurality of selected printers or not.

3. The print system according to claim 1, wherein the print process control device further comprising a group edition unit for grouping a plurality of printers which can perform print processes to select printers of a predetermined group through the printer selection screen.

4. The print system according to claim 1, wherein the print process control device further comprising an error detection unit for detecting whether an error is generated in execution of the print process of the print data or not.

5. A print method for performing a print operation by outputting print data and a print instruction from a print process control device on a network to a plurality of printers connected on the network, comprising:
a printer selection screen display step of displaying a printer selection screen for selecting a predetermined printer from the plurality of printers for executing print processes of the print data on an output unit of the print process control device; and
a print process step of sequentially executing print processes of print data to printers selected such that an operator operates the printer selection screen.

6. The print method according to claim 5, wherein the print process step further comprising:
a printer drive automatic selection step of sequentially automatically selecting printer drivers corresponding to the printers selected such that the operator operates the printer selection screen;
a print process step of executing a print process of the data by using the automatically selected printer driver;
a decision step of deciding whether there is a print process which is unexecuted in the plurality of selected printers or not;
wherein the process steps are performed until all the selected printers execute the print processes.

7. The print method according to claim 5, wherein a plurality of printers which can perform print processes are grouped, and the group is selected to select a plurality of printers.

8. The print method according to claim 5, further comprising an error detection step of detecting whether an error is generated in execution of the print process of the print data or not.

9. A computer readable recording medium in which a print program for performing a print operation by outputting print data and a print instruction from a print process control device on a network to a plurality of printers connected on the network is stored, comprising and make a computer system execute:
a printer selection screen display process of displaying a printer selection screen for selecting a predetermined printer from the plurality of printers for executing print processes of the print data on an output unit of the print process control device; and
a print process of sequentially executing print processes of print data to printers selected such that an operator operates the printer selection screen to cause a computer to execute these processes.

10. The computer readable recording medium according to claim 9, wherein the print process comprises and make a computer system execute:
a printer driver automatic selection process of sequentially automatically selecting printer drivers corresponding to printers selected such that the operator operates the printer selection screen;
a print process of printing data by using the automatically selected printer driver;
a decision process of deciding whether there is a print process which is unexecuted in the plurality of selected printers or not, causes a computer to execute these processes;
wherein the processes is performed until all the selected printers execute print processes.

11. The computer readable recording medium in which a print program is stored according to claim 9, wherein the print program further comprising and make a computer system execute a process of grouping a plurality of printers which can perform print processes, and the print program causes a computer to executes the processes and selects the group to select a plurality of printers.

12. The computer readable recording medium in which a print program is stored according to claim 9, wherein the print program further comprising and make a computer system execute an error detection process of detecting whether an error is generated in execution of the print process of the print data or not, and the print program causes a computer to execute the process.
